# EUROPEAN PATENT APPLICATION

(11) **EP 3 608 050 A1**
(43) Date of publication of application: **12.02.2020**
(21) Application number: 18781426.4
(22) Date of filing: 26.03.2018
(51) Int. Cl.: B23K 35/26, C22C 13/00

(54) **SOLDER MATERIAL**

(30) Priority: 07.04.2017 JP 2017076417
(71) Applicant: Keihin Corporation, Tokyo 163-0539 (JP)
(72) Inventor: HIRAI Yukihiko, Shioya-gun Tochigi 329-1233 (JP); OOMORI Kouki, Shioya-gun Tochigi 329-1233 (JP); ISUMI Mitsuhiro, Shioya-gun Tochigi 329-1233 (JP); TSUCHIYA Ayaka, Shioya-gun Tochigi 329-1233 (JP)
(74) Representative: Weickmann & Weickmann PartmbB
(86) International application number: PCT/JP2018/012113
(87) International publication number: WO 2018/186218

(57) **Abstract**

Provided is a solder material including 2.5-3.3 wt% Ag, 0.3-0.5 wt% Cu, 5.5-6.4 wt% In, and 0.5-1.4 wt% Sb, the remainder being unavoidable impurities and Sn. Specifically, the solder material is a Pb-free solder not including Pb.

## Description

### Technical Field

The present invention relates to a solder material that is used as a joining material when joining objects together.

### Background Art

An electronic component such as a transistor, a diode, a thyristor, and so on, is joined to a circuit board via a solder material. A solder material mainly composed of lead (Pb) has conventionally been employed as the solder material. However, due to the rise in environmental protection awareness of recent years, the solder material is being substituted by a so-called Pb-free solder material that does not include Pb.

The Pb-free solder material has tin (Sn) as its main component, and contains as sub-components silver (Ag) and copper (Cu) that encourage precipitation strengthening. Furthermore, solid solution strengthening is known to be achieved by adding indium (In) and antimony (Sb). For example, Japanese Laid-Open Patent Publication No. 2002-120085 discloses a solder material including 2.5 to 4.5 wt% Ag, 0.2 to 2.5 wt% Cu, not more than 12 wt% In, and not more than 2 wt% Sb, a remainder being Sn. International Publication No. WO 1997/009455 discloses a solder material including 1.4 to 7.1 wt% Ag, 0.5 to 1.3 wt% Cu, 0.2 to 9.0 wt% In, and 0.4 to 2.7 wt% Sb, a remainder being Sn. In some cases, bismuth (Bi) may be further added.

### Summary of Invention

The circuit board with the above-described kind of electronic component being joined configures an on-board engine control unit installed in an automobile and which controls an engine, for example. Now, the automobile is sometimes used in an intensely cold environment, and is sometimes used in an intensely hot environment. It is therefore required that operation is guaranteed in a broad temperature range.

However, a well-known Pb-free solder material is known to have a variation in mechanical characteristics particularly in an extremely low temperature environment. Hence, there is concern that variation will occur in product life of the on-board engine control unit when the automobile is used in the intensely cold environment. Thus, the solder material according to conventional technology has a disadvantage of being insufficiently reliable when used in the extremely low temperature environment.

A main object of the present invention is to provide a solder material that shows stable mechanical characteristics even at a time of extremely low temperature.

Another object of the present invention is to provide a solder material for which sufficient reliability is obtained even when used in an extremely low temperature environment.

According to an aspect of the present invention, there is provided a solder material including 2.5 to 3.3 wt% Ag, 0.3 to 0.5 wt% Cu, 5.5 to 6.4 wt% In, and 0.5 to 1.4 wt% Sb, a remainder thereof being unavoidable impurities and Sn.

By adopting such a composition, a solder material of low melting point can be configured. Due to it having a low melting point, it is possible to lower a temperature applied to the solder material during joining. Hence, infliction of thermal damage on an object to be joined, for example, the electronic component, can be reduced.

Moreover, since an added amount of a solid solution element is small, twinning deformation does not readily occur and generation of hyper-eutectic substance is suppressed, so variation in mechanical characteristics is reduced. Consequently, variation in life of a joined section becomes smaller, and, as a result, product life of a joined article becomes stable. Therefore, reliability thereof is improved. The above will be described in detail later.

As described above, the solder material according to the present invention only includes Sn, Ag, Cu, In, and Sb. Therefore, the solder material does not substantively include Bi. As a result, it represents a solder material having stable mechanical characteristics. Note that "not substantively including" referred to here indicates keeping to an amount that is unavoidably mixed in, and not including an amount that exceeds the unavoidably mixed-in amount.

As described above, according to the present invention, the solder material is configured solely by certain amounts of Ag, Cu, In, Sb, and by Sn. Therefore, a solder material of low melting point and having a small variation in mechanical characteristics can be obtained. Hence, thermal damage inflicted on the joined article can be reduced, and variation in product life can be suppressed to improve reliability.

### Brief Description of Drawings

FIG. 1 is a stress-strain curve for each time when a tensile test has been performed a plurality of times in an environment of -40°C using a specimen configured from an Sn-3.0Ag-0.5Cu-6.0In-1.0Sb alloy (Example);
FIG. 2 is a graph showing magnitude of variation in tensile strength when the tensile test has been performed in an environment of -40°C using specimens of Example and Comparative Examples 1 to 3; and
FIG. 3 is a graph showing magnitude of variation in tensile strength when the tensile test has been performed at from -40°C to over 100°C for Comparative Example 1.

### Description of Embodiments

A preferred embodiment of a solder material according to the present invention will be presented and described in detail below with reference to the accompanying drawings.

A solder material according to the present embodiment is a so-called Pb-free solder material which is mainly composed of Sn and contains Ag and Cu to encourage precipitation strengthening, and to which In and Sb are further added. That is, this solder material is configured from an alloy that includes 2.5 to 3.3% (wt%, hereafter, the same) Ag, 0.3 to 0.5% Cu, 5.5 to 6.4% In, and 0.5 to 1.4% Sb, and whose remainder is unavoidable impurities and Sn.

By setting Ag to 2.5% or more, precipitation strengthening is encouraged as described above. Now, when tensile strength obtained by performing a tensile test a plurality of times in an environment of -40°C on specimens of a Sn-Ag-Cu-In-Sb alloy in which Ag is 3.0% and 3.5% is plotted, variation in tensile strength is found to be larger when Ag is 3.5% compared to when it is 3.0%.

The reason for this is inferred to be because when Ag is 3.5%, there is a eutectic composition of Sn-Ag, so there is a structure in which sub-eutectic substance, eutectic substance, and hyper-eutectic substance are mixed. Therefore, Ag is set to not more than 3.3% in order not to have a eutectic composition. As a result, it is avoided that sub-eutectic substance, eutectic substance, and hyper-eutectic substance are mixed in the structure, and variation in tensile strength can be suppressed.

Cu of 0.3% or more also similarly results in precipitation strengthening being encouraged. On the other hand, when there is a eutectic composition of Sn-Cu, that is, when Cu is roughly 0.7%, it results in a structure in which sub-eutectic substance, eutectic substance, and hyper-eutectic substance are mixed, and variation in tensile strength ends up occurring. In order to avoid this, Cu is set to not more than 0.5%.

Moreover, by adding 5.5% or more In, solid solution strengthening is promoted, and a melting point of the solder material lowers. That is, this solder material has a lower melting point compared to a Pb-free solder material containing only Sn, Ag, and Cu. Therefore, it melts at a low temperature when joining the electronic component to the circuit board, and so on.

On the other hand, if an excess of In is added to Sn, a transformation point of the Sn lowers. For example, at 125°C or more, it transforms into y phase (InSn₄). Such a second phase is part of the reason for variation occurring in mechanical characteristics of the solder material. Accordingly, in order to avoid this, In is set to not more than 6.4%. In this case, twinning deformation never occurs in the solder material.

Furthermore, by adding 0.5% or more Sb, solid solution strengthening is promoted. Moreover, InSn₄ and β-Sn are generated in a liquid phase along with In, whereby crystal grains become minute, thereby resulting in multiple crystal orientations. That is, the solder material shows almost no anisotropy. In other words, it is possible to come close to isotropy.

When specimens configured from an alloy whose proportion of Sb to Sn has been set in a range of 1.0% to 3.0% are used, and stress-strain curves when a tensile test has been performed in an environment of -40°C are found, a result is obtained that although tensile strength increases as the proportion of Sb increases, variation in the tensile strength also increases as the proportion of Sb increases. Specifically, when the proportion of Sb to Sn has been set to 3.0%, a place where stress sharply falls and rises, that is, a disturbance is found to appear in the stress-strain curve. The reason for this is inferred to be that, due to a large amount of the solid solution element, slip deformation does not occur, and as a result, it becomes easier for twinning deformation to occur. In order to avoid this, Sb is set to not more than 1.4% at which twinning deformation does not readily occur.

Moreover, when specimens configured from an alloy whose proportion of Bi to Sn has been set to 1.0%, 2.0%, and 3.0% are used, and stress-strain curves when a tensile test has been performed in an environment of -40°C are found, variation in tensile strength is found to increase even at 1.0%, and a disturbance is found to appear in the stress-strain curve even at 2.0%. The reason for this is thought to be that in the case of Bi having been added, twinning deformation occurs significantly more easily compared to in the case of Sn. Therefore, in the present embodiment, a substantive added amount of Bi is set to zero.

A typical composition of a solder material is Sn-3.0Ag-0.5Cu-6.0In-1.0Sb. That is, the typically composed solder material contains 3.0% Ag, 0.5% Cu, 6.0% In, and 1.0% Sb, and its remainder is Sn and unavoidable impurities.

By adopting such a composition, a solder material whose melting point is low and that has variation in tensile strength suppressed, is obtained. Hence, first, since low temperature melting and joining in reflow are enabled, thermal damage received by the electronic component when the electronic component is joined to the circuit board, for example, can be reduced.

Moreover, since variation in tensile strength is small, life of the joined section that has been joined using the solder material becomes stable with little variation. Hence, reliability is improved. Moreover, since variation in product life of the joined article (for example, the on-board engine control unit, and so on) is suppressed, design flexibility of the joined article is improved, and a high-density or downsized product can be obtained.

### [Example 1]

Specimens configured from the solder material (alloy) whose composition is Sn-3.0Ag-0.5Cu-6.0In-1.0Sb were prepared, and a tensile test was performed a plurality of times in an environment of -40°C, to find a stress-strain curve in each test. Hereafter, this specimen will also be called Example.

Separately from this, specimens configured from solder materials of Comparative Examples 1-3 were prepared, and, similarly to as described above, a tensile test was performed a plurality of times in an environment of -40°C, to find a stress-strain curve in each test. Now, Comparative Example 1 includes neither In nor Sb at all, and Comparative Example 2 includes over 3.0% Ag and over 3.0% Bi. Moreover, Comparative Example 3 includes over 3.0% Ag, over 0.7% Cu, and over 0.7% Bi.

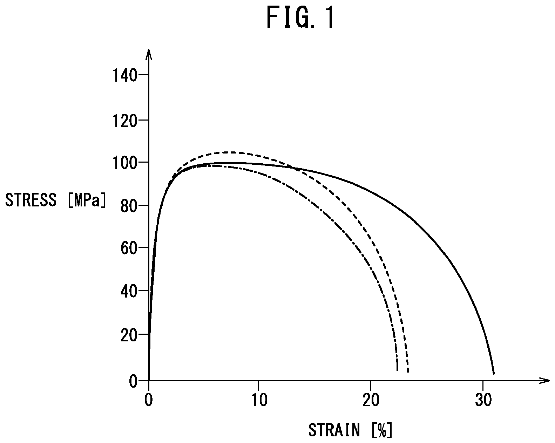

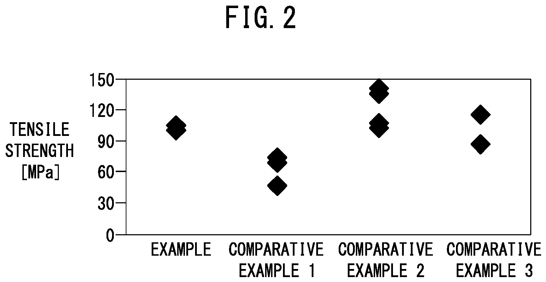

Results of Example are shown in FIG. 1 with a kind of line made different for each time. Furthermore, values of tensile strength in each of the specimens found from the stress-strain curves are shown in FIG. 2 as well. It may be understood from these FIGS. 1 and 2 that in Example, stresses in the respective tests substantially coincide (that is, variation in tensile strength is extremely small), whereas in Comparative Examples 1 to 3, stresses differ test by test, hence variation in tensile strength is large. That is, adopting the composition of Example results in a solder material having stable tensile strength (mechanical characteristics) being obtained.

Note that on comparing melting points of Example and Comparative Example 1, the melting point of Example was found to be approximately 20°C lower. This means that the solder material of Example melts more easily at a lower temperature compared to that of Comparative Example 1.

Furthermore, in Comparative Example 2, it was confirmed that a large disturbance appeared in the stress-strain curve. As a result, in Comparative Example 2, variation in tensile strength is increased.

### [Example 2]

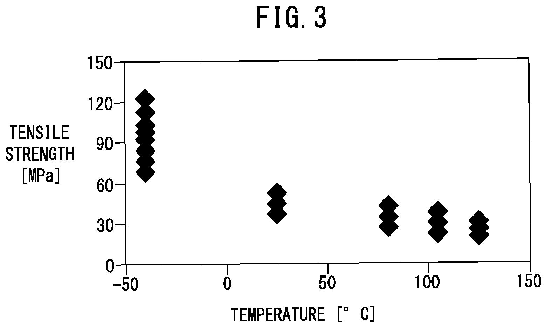

Tensile strength was measured in a temperature range of from -40°C to over 100°C, for specimens of Comparative Example 1. Results are shown in FIG. 3. It may be understood from this FIG. 3 that variation in tensile strength tends to increase as temperature lowers.

Crystal orientation analysis was performed and a Schmidt factor was calculated for a specimen whose tensile strength was 75 MPa and for a specimen whose tensile strength was 45MPa, of the specimens of Comparative Example 1 that had undergone the tensile test at -40°C. As a result, the Schmidt factor was 0.13 for the former and 0.47 for the latter. That is, the Schmidt factor of the specimen having the large tensile strength was small, and the Schmidt factor of the specimen having the small tensile strength was large. It is inferred from this correlation that a main cause of variation is due to there being anisotropy in the crystal orientation.

Furthermore, when microscopic observation of structure was performed for the specimen of Comparative Example 2, it was confirmed that significant twinning deformation occurred in a specimen where the disturbance appearing in the stress-strain curve was large, whereas in a specimen where the disturbance was small, although twinning deformation did occur, a scale of that twinning deformation was small. That is, the larger the twinning deformation was, the larger the disturbance appearing in the stress-strain curve was, and the larger variation in the tensile strength was.

In contrast, in Example, stable tensile strength was shown even in the environment of -40°C as described above, and furthermore, twinning deformation could not be found even when microscopic observation was performed. It is clear from this that setting the composition within the above-described range and substantively setting Bi to zero results in a solder material having a small variation in tensile strength being obtained.

## Claims

1. A solder material including 2.5 to 3.3 wt% Ag, 0.3 to 0.5 wt% Cu, 5.5 to 6.4 wt% In, and 0.5 to 1.4 wt% Sb, a remainder thereof being unavoidable impurities and Sn.

2. The solder material according to claim 1, wherein the solder material does not substantively include Bi.

3. The solder material according to claim 1 or 2, wherein a crystal orientation thereof is isotropic.

4. The solder material according to any one of claims 1 to 3, wherein the solder material does not include twinning deformation in its structure.

## Amended claims

### Amended claims under Art. 19.1 PCT

1. (Amended) A solder material including 2.5 to 3.3 wt% Ag, 0.3 to 0.5 wt% Cu, 5.5 to 6.4 wt% In, and 0.5 to 1.4 wt% Sb, a remainder thereof being unavoidable impurities and Sn, wherein the solder material does not substantively include Bi.

2. (Cancelled)

3. (Cancelled)

4. (Cancelled)
